# EUROPEAN PATENT APPLICATION

(11) **EP 2 348 296 A1**
(43) Date of publication of application: **27.07.2011**
(21) Application number: 11150805.7
(22) Date of filing: 13.01.2011
(51) Int. Cl.: G01L 5/10

(54) **Wireless sensor for controlling the tension of traction cables**

(30) Priority: 21.01.2010 ES 201000076
(71) Applicant: Micelect, S.L., 28850 Torrejon de Ardoz (ES)
(72) Inventor: Munoz Ochovo, Javier, 28850, Torrejon De Ardoz (Madrid) (ES)
(74) Representative: Cabinet Plasseraud

(57) **Abstract**

The present invention relates to a wireless sensor for controlling the tension of traction cables, formed by a body (1) provided at the ends and in the central area with conformations (2, 3 and 4) which determine opposing support points on the cables of application, an electronic module (6) which converts the bending deformations of said body (1) into equivalent tension data of the cables on which the sensor is applied, a memory module (9) which stores the data provided by said electronic module (6) and an emitter module (10) which allows transmitting those data provided by the electronic module (6) wirelessly through an antenna (12), all being housed in the body (1).

## Description

### Field of the Art

The present invention relates to controlling the tension of cables subjected to traction, such as elevator suspension cables and similar applications, proposing for that purpose a sensor which allows controlling the tension of the cables of the system of application remotely and in real time, for providing data according to which the corresponding installation can be adjusted and safety conditions thereof can be established.

### State of the Art

There are several means, apparatuses and devices which measure, in a more or less indirect manner, the suspended masses in the installations which operate using traction cables, the operation of such means being configured based on a calibration of the installation according to calibrated masses, whereby a fixed calibration is obtained which does correspond to the reality of the loads that the installation must support, since said loads change according to the circumstances of each time the application is used.

There are, on the other hand, solutions which allow directly measuring on the cables the tension created therein by the loads to which they are subjected, such as for example, the means to which Patents ES 2168163 and ES 2190767 relate, which jointly control the tension of all the cables of an installation, or patents ES 1055746U or ES 1069860U, which allow controlling the specific tension of each cable of an installation, for a fixed or variable cable diameter, respectively.

Conventionally, sensors of this type are related to an external control system, said relation being established through a connection cable, which forces the sensor to be at a point near the control system at all times, such that the sensor must be securely placed in one point, whereby measurements can only be taken on immobile cables, whereby the use of application of the system is limited to measurements in a static situation, as it does not allow taking measurements in a dynamic state.

With said known systems, only data relating to the behavior of the cables in static conditions can ,therefore, be known, whereby only the traction system can be adjusted according to the static conditions based on the data that is obtained, which can cause incorrect and possibly dangerous adjustments.

### Object of the Invention

According to the invention a tension sensor device is proposed for the application in sets of cable or in independent cables of different sizes, whereby advantageous functional features are obtained, since it does not use cables for data transmission, allowing the placement of the sensor at any point and its mobility during use.

This sensor object of the invention consists of a body made from a hard material with determined elasticity constants, incorporating at the ends and in the central part support conformations for the cable of application which establish unaligned support points for the cable, a processor module being housed in the mentioned body capable of detecting and processing in data the slight elastic deformations of said body by the transversal stress which the cable of application causes due to the opposing stress on the supports in the end and central conformations.

Regarding the processor module, there is a memory module for storing the processed data, an emitter module and a battery which powers the system, all these components being integrated in spaces made in the body of the sensor, forming a compact assembly.

A sensor which allows measuring the tension of cables of application is therefore obtained, and storing the data in the integrated memory in order to be subsequently downloaded, or sending the data via radio frequency, through the emitter module, to a control unit located at a fixed point which an operator can easily access.

The system allows arranging the sensor at any point of the cables of application, which during the measuring process can be in motion, making it possible for measurements to be taken continuously, such that data of the tension with respect to any point of the cables and in dynamic conditions can be made available, which allows performing a precise and accurate adjustment of the system of application according to the behavior conditions thereof in operation.

Additionally, the control unit in which the data provided by the sensor is received can be installed in any place which, for protection and accessibility purposes, is appropriate for the operator who has to gather the information.

Therefore, the sensor of the invention has certainly advantageous features, acquiring a life of its own and a preferred character with respect to the devices that already exist for the same function.

### Description of the Drawings

Figure 1 shows a diagram of the application of a conventional sensor in measuring the tension of the cable of a single suspension elevator apparatus, with the sensor arranged in the suspension part of the car.
Figure 2 shows a diagram similar to that of the previous figure, with the sensor arranged in the suspension part of the counterweight.

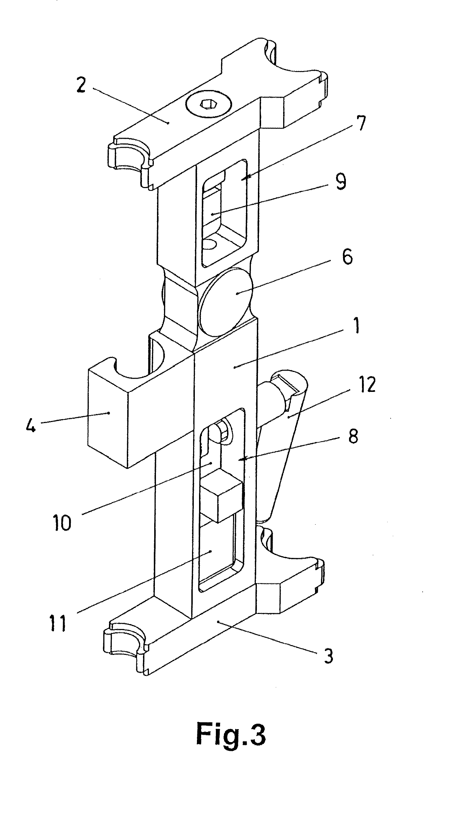

Figure 3 shows a perspective view of the sensor of the invention according to a practical non-limiting embodiment.

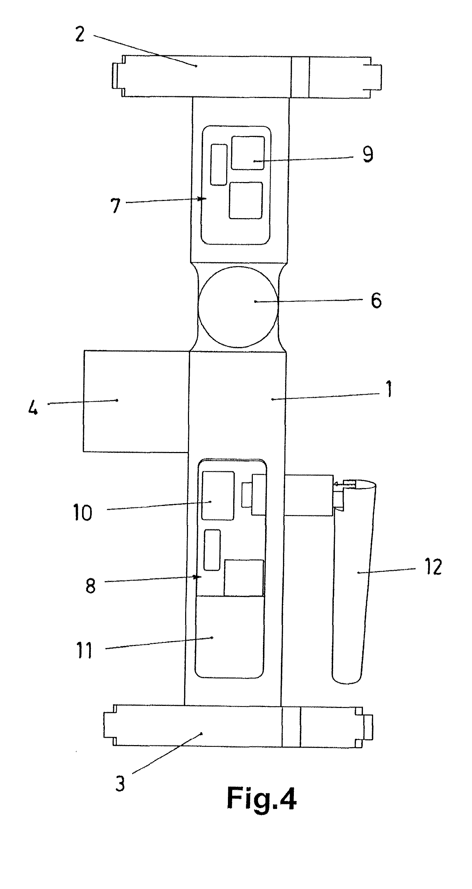

Figure 4 shows a front view of the sensor of the previous figure.

### Detailed Description of the Invention

The object of the invention relates to a sensor intended for controlling the tension of cables subjected to a traction load, such as elevator cables, without this application being limiting, with embodiment features of said sensor which allow taking measurements continuously and in dynamic conditions on the cables of application.

The recommended sensor consists of a body (1) made from a hard material, with determined elasticity features, incorporating conformations (2, 3 and 4) which project towards a side at the ends and in the middle area, for a non-aligned passage of the cables (5) of application establishing opposing supports on said conformations (2, 3 and 4).

The device can thus be coupled, for its application, on a cable (5) subjected to tension, said cable (5) being arranged between the end conformations (2 and 3) and the central conformation (4), whereby opposing supports are established which, as a result of the tension of the cable (5), force a slight bending of the body (1), such that the deformation is pronounced by an electronic processing module (6) which is housed in the body (1) itself, generating signals proportional to the deformations occurring in each case, which are processed, being converted into data which corresponds with the tension of the corresponding cable(5).

The body (1) of the sensor determines gaps (7 and 8) in which a memory module (9) for data storage, an emitter module (10) for sending data wirelessly and an electric supply battery (11) are housed, these elements being connected with the electronic module (6), the whole assembly forming an integrated system in the body (1) of the sensor.

A transmission-reception antenna (12) is also incorporated in the body (1), through which operating commands can be received for the operation of the sensor and the obtained data be transmitted from the memory module (9) or from the emitter module (10).

In the use of application of the sensor, the electronic module (6) collects the deformation measurements of the body (1), converting them into tension data of the cable (5) of application, which can be stored in the memory module (9) or be sent in real time by means of the emitter module (10), through the antenna (12), to a remote control unit which can be located in an easily accessible place, since the data transmission communication from the sensor is performed via radio frequency.

Data collection in the remote control unit can thus be performed simultaneously to taking the measurements, in real time, and with the cable (5) of application in motion, measurements being thus obtained dynamically which allow a perfect adjustment of the cable (5) according to the variations in tension thereof which occur during the operation. The data which the sensor provides can also be stored in the memory module (9), in order to be extracted, at the request of an operator, whenever it is necessary to check the system of application.

Although a sensor of application for measuring the tension of only one cable (5) has been depicted in the drawings, this embodiment is only an example without any limiting character, the body (1) of the sensor being able to have any other shape of those which are already known in sensors for measuring the tension of one or multiple cables (5) subjected to traction.

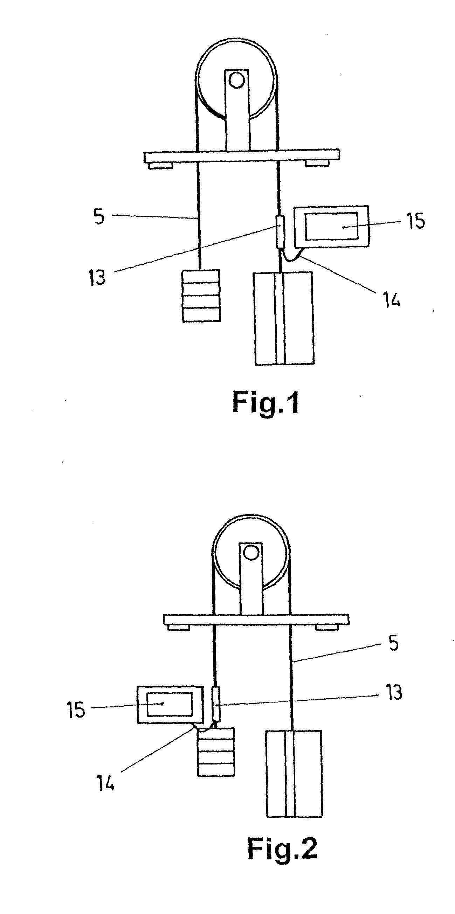

The recommended sensor, therefore, overcomes in a practical and advantageous manner the drawbacks of conventional sensors (13) which are connected by means of an electrical communication cable (14) to a control unit (15) in which the data provided by the sensor (13) about the tension of the cable or cables (5) of application is received, such that the electrical connection by means of a cable (14) between the sensor (13) and the control unit (15) prevents being able to be take measurements on the cable or cables (5) of application in the dynamic state, since the sensor (13) has to be arranged at a fixed point on the corresponding cable (5) and the control unit (15) located in a position with respect to what the connection can establish and maintain with the electrical communication cable (14), as depicted in Figures 1 and 2.

## Claims

1. A wireless sensor for controlling the tension of traction cables, of the type comprising a body (1) made from a hard material, arranging conformations (2, 3 and 4) at the ends and in the central area through which, establishing opposing supports, the cables (5) of application are passed, which force the body (1) under bending, the measurement of said bending being converted into an equivalent tension datum of the cables (5) by an electronic processing module (6), **characterized in that** a memory module (9) which allows storing the processed data provided by the electronic module (6), an emitter module (10) which allows transmitting the data processed by the electronic module (6) to a remote control unit via wireless radio frequency, and an electric supply battery (11) are integrated, housed in the body (1) of the sensor.

2. The wireless sensor for controlling the tension of traction cables according to claim 1, **characterized in that** the memory module (9) and the emitter module (10) are connected to a transmission-reception antenna (12) which is incorporated in the same body (1) of the sensor.
